# FASCICULE DE BREVET EUROPEEN

(11) **EP 2 861 483 B1**
(45) Date de publication et mention de la délivrance du brevet: **17.08.2016**
(21) Numéro de dépôt: 13733374.6
(22) Date de dépôt: 07.06.2013
(51) Int. Cl.: B62D 25/08

(54) **STRUCTURE DE CAISSE D'UN VÉHICULE AUTOMOBILE**
KAROSSERIESTRUKTUR FÜR EIN KRAFTFAHRZEUG
BODYWORK STRUCTURE OF A MOTOR VEHICLE

(30) Priorité: 19.06.2012 FR 1255748
(43) Date de publication de la demande: 22.04.2015
(73) Titulaire: Renault S.A.S., 92100 Boulogne-Billancourt (FR)
(72) Inventeur: LAMRINI, Jaafar, F-78150 Le Chesnay (FR)
(86) Numéro de dépôt international: PCT/FR2013/051316
(87) Numéro de publication internationale: WO 2013/190209

(56) Documents cités:
- EP-A1- 2 460 713
- DE-A1-102010 011 320
- US-A1- 2011 031 781

## Description

L'invention concerne une structure de caisse d'un véhicule automobile et, plus particulièrement, une structure supérieure avant de caisse de véhicule automobile agencée en avant d'une cellule formant habitacle du véhicule, du type comportant une cloison de chauffage transversale délimitant un corps creux et présentant un bossage du côté d'une paroi latérale de ladite structure formant support pour une aile du véhicule et sur une face intérieure de laquelle est montée solidaire, immédiatement en avant de ladite cloison de chauffage transversale, une coupelle d'amortisseur avant, qui est portée par une rehausse de coupelle d'amortisseur avant adjacente à ladite face intérieure, ladite coupelle d'amortisseur avant étant liée à un renfort de cloison de chauffage, qui s'étend sensiblement dans l'alignement longitudinal du corps creux délimité par ladite cloison de chauffage. Le document US 2011/031781 A1 décrit une telle structure.

On cherche généralement à rendre les différentes parties de la structure de caisse résistantes vis-à-vis des contraintes statiques et dynamiques auxquelles le véhicule est exposé. Dans ce contexte, un objectif communément poursuivi concerne l'augmentation de la fréquence du mode propre de torsion dynamique du véhicule. En effet, ce mode participe directement au comportement dynamique du véhicule et, en particulier, est directement lié au confort acoustique du véhicule. A cet égard, un paramètre acoustique important généralement requis par le cahier des charges concerne l'inertance acoustique, permettant de mesurer la raideur d'une source émettrice d'ondes sonores, qui s'exprime en N/m. En particulier, le cahier des charges exige une valeur minimale pour l'inertance des coupelles d'amortisseur avant, dans la direction Y, i.e. dans la direction perpendiculaire à la direction longitudinale du véhicule. Cette valeur peut par exemple être fixée à 2.10⁷ N/m.

Or, lorsque le véhicule est en phase de roulement, la cloison de chauffage subit des déplacements en translation suivant l'axe vertical Z du véhicule, phénomène communément appelé « pompage », qui se trouve encore accentué par la présence du bossage réalisé sur un côté de la cloison de chauffage et destiné à adapter cette dernière à la présence à proximité du dispositif de servofrein (mastervac). Ce phénomène provoque l'entraînement en rotation de la coupelle d'amortisseur avant agencée au voisinage de ce bossage de la cloison de chauffage, laquelle coupelle se déforme en pivotant sur elle-même. La rotation de cette coupelle d'amortisseur avant engendre une dégradation significative de son inertance dans la direction Y, entraînant une nuisance acoustique importante. La présence du renfort de cloison de chauffage est alors essentielle pour renforcer la raideur de la liaison entre cette coupelle d'amortisseur avant et la cloison de chauffage, mais est toutefois insuffisante pour pouvoir élever notablement l'inertance de la coupelle.

Dans ce contexte la présente invention a pour but de proposer une structure supérieure avant de caisse de véhicule automobile susceptible de remédier à ces inconvénients.

A cette fin, la structure supérieure avant de caisse de véhicule automobile de l'invention, par ailleurs conforme à la définition générique qu'en donne le préambule ci-dessus, est essentiellement caractérisée en ce qu'elle comporte un élément de renfort agencé entre ladite rehausse de coupelle d'amortisseur avant et ledit renfort de cloison de chauffage, pour prévenir les mouvements de déformation en rotation de ladite coupelle d'amortisseur avant lors du déplacement en translation suivant un axe vertical du véhicule de ladite cloison de chauffage transversale.

Grâce à cet agencement, la raideur de la liaison coupelle d'amortisseur avant et cloison de chauffage est augmentée significativement, permettant à l'inertance de la coupelle d'amortisseur avant située au voisinage du bossage de la cloison de chauffage d'au moins se rapprocher notablement, voire d'atteindre la valeur fixée par le cahier des charges. La raideur en torsion de la caisse s'en trouve ainsi améliorée, ce qui favorise une augmentation de la fréquence du mode propre de torsion dynamique du véhicule. Au surplus, ce gain en raideur de la structure de caisse est avantageusement procuré en limitant l'apport de masse.

Selon encore d'autres caractéristiques avantageuses de l'invention, prises isolément ou en combinaison :
- ledit élément de renfort est agencé entre ladite rehausse de coupelle d'amortisseur et ledit renfort de cloison de chauffage au niveau de l'extrémité supérieure d'une face latérale de ladite rehausse de coupelle d'amortisseur avant située au droit du corps creux ;
- ledit élément de renfort présente la forme d'un profilé comportant une section transversale sensiblement en équerre orientée selon un plan perpendiculaire à une direction longitudinale du véhicule, et dont une première aile est soudée sur ladite rehausse de coupelle d'amortisseur avant, tandis qu'une seconde aile sensiblement perpendiculaire à ladite première aile est soudée sur ledit renfort de cloison de chauffage;
- ledit élément de renfort présente une première dimension orientée selon une direction longitudinale du véhicule dont la longueur est au moins égale à 100 millimètres ;
- ledit élément de renfort présente une deuxième dimension orientée selon l'axe vertical du véhicule dont la longueur est au moins égale à 100 millimètres ;
- ledit élément de renfort présente une épaisseur sensiblement égale à 1,5 millimètre.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique de dessus dans le plan (X, Y) du véhicule automobile, illustrant une structure supérieure avant de caisse de véhicule automobile faisant l'objet de l'invention,
- la Figure 2 est une illustration schématique en vue de côté d'un détail de la structure supérieure avant de caisse de véhicule automobile modifiée conformément à l'invention, et
- la Figure 3 est une vue en coupe selon l'axe Y du véhicule de la figure 2.

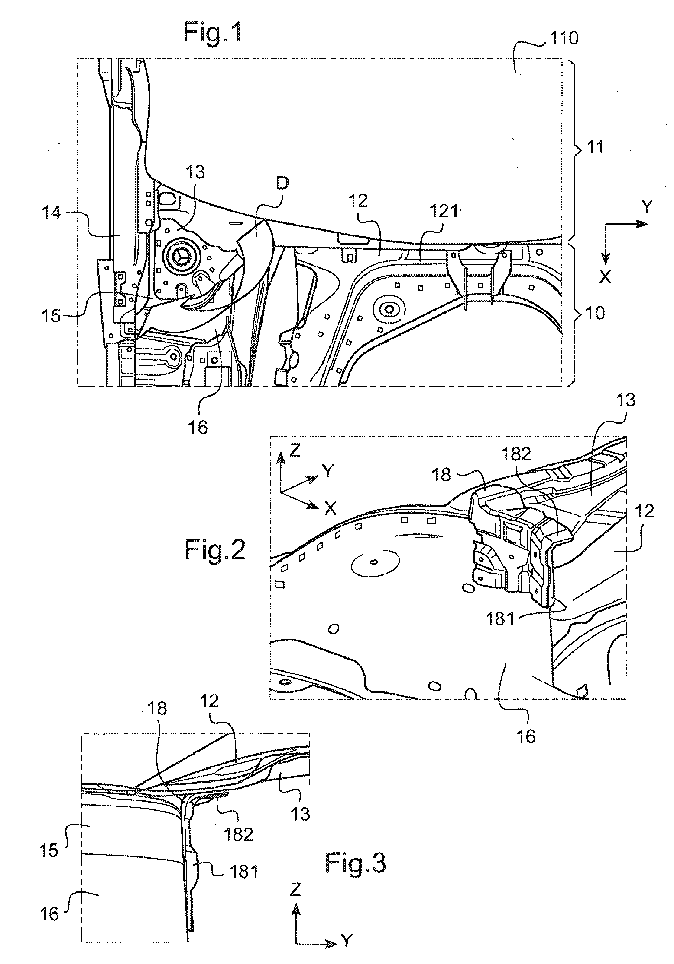

A titre d'illustration, la figure 1 représente schématiquement un véhicule vu de haut, dans le plan (X, Y), la direction longitudinale du véhicule étant selon X. La partie droite de la structure supérieure avant de caisse 10, qui concerne plus particulièrement la présente invention, est représentée. Cette structure supérieure avant de caisse 10 est agencée en avant d'une cellule rigide 11, formant un habitacle du véhicule automobile, fermé par un pare-brise 110. La structure supérieure avant 10 comporte une cloison de chauffage transversale 12 sensiblement verticale, qui s'interpose entre la structure supérieure avant de caisse 10 et la cellule 11, permettant de délimiter un corps creux pour un équipement de chauffage du véhicule. Un bossage 121 est réalisé par emboutissage de la cloison de chauffage transversale 12, pour adapter la cloison de chauffage à la présence du dispositif de servofrein (mastervac) à proximité. Ce bossage 121 de la cloison de chauffage transversale 12 est agencé au voisinage d'une paroi latérale verticale 14, délimitant la structure supérieure avant de caisse 10 et destinée à former un support pour l'aile avant droite du véhicule.

La structure supérieure avant de caisse 10 comporte aussi, en avant et à proximité immédiate de la cloison de chauffage 12, une coupelle d'amortisseur avant 15, dite coupelle d'amortisseur avant droite, montée solidaire de la paroi latérale 14 et qui est portée par une rehausse de coupelle d'amortisseur avant 16, dite rehausse de coupelle d'amortisseur avant droite, adjacente à la face intérieure de la paroi latérale 14. La coupelle d'amortisseur avant droite 15 est en outre liée à un renfort de cloison de chauffage 13, qui s'étend sensiblement dans l'alignement longitudinal du corps creux délimité par la cloison de chauffage 12, entre la cloison de chauffage 12 et la coupelle d'amortisseur avant droite 15. La flèche D représentée à la figure 1 illustre le mouvement de déformation en rotation subi par la coupelle d'amortisseur avant droite 15 dans le plan (X, Y) lors du « pompage » de la cloison de chauffage 12, dont le bossage 121 accentue l'intensité. Cette rotation de la coupelle d'amortisseur avant droite 15 entraîne, comme expliqué en préambule, une inertance trop basse de la coupelle d'amortisseur avant droite 15 dans la direction Y.

Aussi, conformément à l'invention, et comme illustré à la figure 2, la structure supérieure avant de caisse comporte un élément de renfort 18, agencé entre la rehausse de coupelle d'amortisseur avant droite 16 et le renfort de cloison de chauffage 13, de manière à prévenir les mouvements de déformation en rotation de la coupelle d'amortisseur avant droite 15 lors du « pompage » de la cloison de chauffage transversale 12, pendant que le véhicule roule. Cet élément de renfort 18 participe avantageusement à la raideur nécessaire à l'augmentation de la fréquence du mode propre de torsion de la caisse, en permettant de renforcer la raideur de la liaison entre la coupelle d'amortisseur avant droite 15 et la cloison de chauffage 12, grâce à l'action spécifique et très localisée qu'il réalise consistant à joindre la rehausse de coupelle d'amortisseur avant 16 et le renfort de cloison de chauffage 13.

Bien que l'élément de renfort 18 soit représenté apparent à des fins de clarté sur la vue de la figure 2, la vue de détail en coupe de la figure 3 montre que l'élément de renfort 18 est agencé entre la rehausse de coupelle d'amortisseur avant droite 16 et le renfort de cloison de chauffage 13, au niveau de l'extrémité supérieure de la face latérale de la rehausse de coupelle d'amortisseur avant 16 située au droit du corps creux délimité par la cloison de chauffage 12 et le renfort de cloison de chauffage 13.

Plus précisément, l'élément de renfort 18 présente la forme d'un profilé, de préférence réalisé en acier, qui comporte une section transversale sensiblement en équerre orientée selon le plan (Z, Y), i.e. dans le plan perpendiculaire à la direction longitudinale X du véhicule. Dans cette configuration, le profilé présente une première aile 181 soudée sur la rehausse de coupelle d'amortisseur avant droite 16, tandis qu'une seconde aile 182, sensiblement perpendiculaire à la première aile 181, est soudée sur le renfort de cloison de chauffage 13. Avantageusement et de manière non limitative, la première aile 181 de l'élément de renfort 18 est soudée par cinq points de soudure à la rehausse de coupelle d'amortisseur avant droite 16 et la deuxième aile 182 de l'élément de renfort 18 est soudée par trois points de soudure au renfort de cloison de chauffage 13.

Dans cette configuration, l'élément de renfort 18 présente une première dimension orientée essentiellement selon la direction longitudinale X du véhicule. Avantageusement, la longueur de cette première dimension est au moins égale à 100 millimètres. L'élément de renfort 18 comprend aussi une deuxième dimension orientée essentiellement selon l'axe vertical Z du véhicule, Avantageusement, la longueur de cette deuxième dimension est au moins égale à 100 millimètres. L'élément de renfort 18 comprend enfin une troisième dimension selon l'axe Y du véhicule, qui définit la longueur de recouvrement entre la deuxième aile 182 de l'élément de renfort 18 et le renfort de cloison de chauffage 13. Avantageusement, la longueur de troisième dimension est au moins égale à 25 millimètres. Par ailleurs, l'élément de renfort 18 présente avantageusement une épaisseur sensiblement égale à 1,5 millimètre.

Cette configuration de l'élément de renfort 18 permet d'élever significativement l'inertance acoustique de la coupelle d'amortisseur avant droite 15, en augmentant la raideur de la liaison entre la coupelle d'amortisseur avant 15 et la cloison de chauffage 12.

## Revendications

1. Structure supérieure avant (10) de caisse d'un véhicule automobile agencée en avant d'une cellule (11) formant habitacle du véhicule, comportant une cloison de chauffage transversale (12) délimitant un corps creux et présentant un bossage (121) du côté d'une paroi latérale (14) de ladite structure formant support pour une aile du véhicule et sur une face intérieure de laquelle est montée solidaire, immédiatement en avant de la cloison de chauffage transversale, une coupelle d'amortisseur avant (15), qui est portée par une rehausse de coupelle d'amortisseur avant (16) adjacente à ladite face intérieure, ladite coupelle d'amortisseur avant (15) étant liée à un renfort de cloison de chauffage (13), qui s'étend sensiblement dans l'alignement longitudinal du corps creux délimité par ladite cloison de chauffage (12), **ladite structure étant caractérisée en ce qu**'elle comporte au moins un élément de renfort (18) agencé entre ladite rehausse de coupelle d'amortisseur avant (16) et ledit renfort de cloison de chauffage (13), pour prévenir les mouvements de déformation en rotation de ladite coupelle d'amortisseur avant (15) lors du déplacement en translation suivant un axe vertical (Z) du véhicule de ladite cloison de chauffage (12).

2. Structure selon la revendication 1, **caractérisée en ce que** l'élément de renfort (18) est agencé entre ladite rehausse de coupelle d'amortisseur avant (16) et ledit renfort de cloison de chauffage (13), au niveau de l'extrémité supérieure d'une face latérale de ladite rehausse de coupelle d'amortisseur avant (16) située au droit du corps creux.

3. Structure selon l'une quelconque des revendications 1 ou 2, **caractérisée en ce que** ledit élément de renfort (18) présente la forme d'un profilé comportant une section transversale sensiblement en équerre orientée selon un plan perpendiculaire à une direction longitudinale (X) du véhicule, et dont une première aile (181) est soudée sur ladite rehausse de coupelle d'amortisseur avant (16), tandis qu'une seconde aile (182) sensiblement perpendiculaire à ladite première aile (181) est soudée sur ledit renfort de cloison de chauffage (13).

4. Structure selon l'une quelconque des revendications précédentes, **caractérisée en ce que** ledit élément de renfort (18) présente une première dimension orientée selon une direction longitudinale (X) du véhicule dont la longueur est au moins égale à 100 millimètres.

5. Structure selon l'une quelconque des revendications précédentes, **caractérisée en ce que** ledit élément de renfort (18) présente une deuxième dimension orientée selon l'axe vertical (Z) du véhicule dont la longueur est au moins égale à 100 millimètres.

6. Structure selon l'une quelconque des revendications précédentes, **caractérisée en ce que** ledit élément de renfort (18) présente une épaisseur sensiblement égale à 1,5 millimètre.

## Patentansprüche

1. Obere, vordere Karosseriestruktur (10) eines Kraftfahrzeugs, welche vor einer, einen Fahrgastraum des Fahrzeugs bildende Zelle (11) angeordnet ist, welche eine quer verlaufende Heizwand (12) aufweist, die einen hohlen Körper abgrenzt und eine Erhöhung (121) auf der Seite einer Seitenwand (14) der Struktur aufweist, welche einen Träger für einen Kotflügel des Fahrzeugs bildet und an deren inneren Fläche, direkt vor der quer verlaufenden Heizwand eine vordere Stoßdämpfermanschette (15) fest verbunden montiert ist, welche von einem vorderen Stoßdämpferdom (16) getragen wird, welcher zu der inneren Fläche benachbart ist, wobei die vordere Stoßdämpfermanschette (15) mit einer Heizwandverstärkung (13) verbunden ist, welche sich im Wesentlichen in der longitudinalen Ausrichtung des von der Heizwand (12) abgegrenzten Hohlkörpers erstreckt, wobei die Struktur **dadurch gekennzeichnet ist, dass** sie mindestens ein Verstärkungselement (18) aufweist, welches zwischen dem Stoßdämpferdom (16) und der Heizwandverstärkung (13) angeordnet ist, um Verformungsbewegungen der vorderen Stoßdämpfermanschette (15) in Drehrichtung bei der Translationsbewegung der Heizwand (12) gemäß einer vertikalen Achse (Z) des Fahrzeugs vorzubeugen.

2. Struktur nach Anspruch 1, **dadurch gekennzeichnet, dass** das Verstärkungselement (18) zwischen dem Stoßdämpferdom (16) und der Heizwandverstärkung (13) auf Höhe des oberen Endes einer seitlichen Fläche des vorderen Stoßdämpferdoms (16) angeordnet ist, der sich gegenüber dem hohlen Körper befindet.

3. Struktur nach einem der Ansprüche 1 oder 2, **dadurch gekennzeichnet, dass** das Verstärkungselement (18) sich in der Form eines Profils darstellt, welches einen im Wesentlichen Winkelquerschnitt aufweist, welcher gemäß einer zu einer longitudinalen Richtung (X) des Fahrzeugs senkrechten Ebene ausgerichtet ist, und von dem ein erster Arm (181) an dem vorderen Stoßdämpferdom (16) angeschweißt ist, während ein zweiter Arm (182), welcher im Wesentlichen senkrecht zu dem ersten Arm (181) verläuft, an der Heizwandverstärkung (13) angeschweißt ist.

4. Struktur nach einem der vorhergehenden Ansprüche, **dadurch gekennzeichnet, dass** das Verstärkungselement (18) eine erste Abmessung aufweist, welche gemäß einer longitudinalen Richtung (X) des Fahrzeugs ausgerichtet ist, deren Länge mindestens gleich 100 Millimeter ist.

5. Struktur nach einem der vorhergehenden Ansprüche, **dadurch gekennzeichnet, dass** das Verstärkungselement (18) eine zweite Abmessung aufweist, welche gemäß einer vertikalen Richtung (Z) des Fahrzeugs ausgerichtet ist, deren Länge mindestens gleich 100 Millimeter ist.

6. Struktur nach einem der vorhergehenden Ansprüche, **dadurch gekennzeichnet, dass** das Verstärkungselement (18) eine Dicke aufweist, welche im Wesentlichen gleich 1,5 Millimeter ist.

## Claims

1. Motor vehicle body shell forward upper structure (10) sited forward of a cell (11) that forms the passenger compartment of the vehicle, comprising a transverse scuttle (12) delimiting a hollow body and having a box (121) on the side of a lateral wall (14) of the said structure forming a support for a wing of the vehicle and on an interior face of which there is firmly mounted, immediately forward of the transverse scuttle, a front shock absorber mount (15) which is born by a front shock absorber mount raiser (16) adjacent to the said interior face, the said front shock absorber mount (15) being connected to a scuttle reinforcer (13) which extends substantially in the longitudinal alignment of the hollow body delimited by the said scuttle (12), the said structure being **characterized in that** it comprises at least one reinforcing element (18) arranged between the said front shock absorber mount raiser (16) and the said scuttle reinforcement (13) so as to prevent deformation rotation movements of the said front shock absorber mount (15) if there is translational movement of the said scuttle (12) along a vertical axis (Z) of the vehicle.

2. Structure according to Claim 1, **characterized in that** the reinforcing element (18) is arranged between the said front shock absorber mount raiser (16) and the said scuttle reinforcer (13), in the region of the upper end of a lateral face of the said front shock absorber mount raiser (16) situated in line with the hollow body.

3. Structure according to either one of Claims 1 and 2, **characterized in that** the said reinforcing element (18) has the shape of a profiled element having a substantially angle-bracket-shaped cross section oriented in a plane perpendicular to a longitudinal direction (X) of the vehicle, a first flange (181) of which is welded to the said front shock absorber mount raiser (16) whereas a second flange (182), substantially perpendicular to the said first flange (181) is welded to the said scuttle reinforcer (13).

4. Structure according to any one of the preceding claims, **characterized in that** the said reinforcing element (18) has a first dimension oriented in a longitudinal direction (X) of the vehicle the length of which is at least equal to 100 millimetres.

5. Structure according to any one of the preceding claims, **characterized in that** the said reinforcing element (18) has a second dimension oriented in a vertical axis (Z) of the vehicle the length of which is at least equal to 100 millimetres.

6. Structure according to any one of the preceding claims, **characterized in that** the said reinforcing element (18) has a thickness substantially equal to 1.5 millimetres.
